# EUROPEAN PATENT APPLICATION

(11) **EP 4 817 707 A1**
(43) Date of publication of application: **07.10.2026**
(21) Application number: 26165607.8
(22) Date of filing: 17.03.2026
(51) Int. Cl.: A63F 13/24, A63F 13/98, A63F 13/92

(54) **GAMEPAD CHARGING DOCK**

(30) Priority: 03.04.2025 CN 202520628576 U
(71) Applicant: Shenzhen DeOne Innovation Technology Co., Ltd, Shenzhen, Guangdong 518129 (CN)
(72) Inventor: JIANG, DEZHONG, Xiaogan City (CN); HE, BEIJING, Xi'an City (CN); XIE, HUAYONG, Zhanjiang City (CN)
(74) Representative: Valet Patent Services Limited

(57) **Abstract**

A gamepad charging dock relates to the field of handle charging technology. By setting a connection part on one side of the gamepad charging dock, a gamepad can be detachably connected to the side of the gamepad charging dock, thereby reducing a size of the gamepad charging dock in a horizontal direction. At the same time, the center of gravity of the gamepad charging dock is shifted downwards to avoid a situation where the center of gravity of the combination of the gamepad charging dock and the gamepad is too high, thereby avoiding damage caused by the collapse and collision of the gamepad and the gamepad charging dock.

## Description

### TECHNICAL FIELD

The present disclosure relates to the field of gamepad charging dock technologies, and in particular, to a gamepad charging dock.

### BACKGROUND

Most game consoles on the market are split-type game consoles, with a detachable connection between a console and a gamepad. A user connects the console to a Television (TV) or display screen and then uses the gamepad to control the game. When a host is connected to the TV or display screen, it will charge the host at the same time, and the gamepad will continue to consume power during use. In general, the gamepad will consume power faster than the host.

In order to charge the gamepad, a gamepad charging dock has emerged. The gamepad charging dock is configured to place the gamepad and charge it. When placing the gamepad on a conventional charging base, the gamepad is placed from top to bottom on the charging base. A charging interface of the gamepad is located at one end in a width direction of the gamepad. When charging the gamepad, the charging interface of the gamepad should face the charging base of the gamepad, that is, the charging interface of the gamepad should face downwards. Causing the length direction of the gamepad to coincide with the horizontal direction of the gamepad charging dock, resulting in an increase in the volume of the gamepad charging dock in the horizontal direction. When the gamepad charging dock is placed on the desktop, it requires a large desktop space and is not convenient to place.

### SUMMARY

The purpose of the present disclosure is to provide a gamepad charging dock that addresses the deficiencies and shortcomings of existing technology. By providing a connection part on one side of a shell, the gamepad can be detachably connected to one side of the gamepad charging dock, so that a length direction of the gamepad coincides with a height direction of the gamepad charging dock, reducing the size of the gamepad charging dock in a horizontal direction. At the same time, by accommodating a counterweight block at a bottom, the center of gravity of the gamepad charging dock is shifted downward, thereby preventing the gamepad charging dock from shaking.

To achieve the above objectives, the technical solution adopted in the present disclosure is that a gamepad charging dock for charging a gamepad, the gamepad charging dock including a shell, a charging module, and a counterweight block. One side of the shell is provided with at least one connection part, and the connection part is detachably connected to the gamepad. The shell structure forms a storage chamber, and the charging module is at least partially accommodated in the storage chamber. The charging module is electrically connected to the gamepad to charge the gamepad, and the counterweight block is accommodated in the storage chamber and adjacent to a bottom of the storage chamber.

After adopting the above technical solution, the beneficial effect of the present disclosure is to provide the connection part on the side of the shell. Make the gamepad detachable and connected to the side of the gamepad charging dock, so that the length direction of the gamepad coincides with the height direction of the gamepad charging dock, reducing the size of the gamepad charging dock in the horizontal direction. At the same time, by accommodating the counterweight block adjacent to the bottom of the accommodation chamber, the center of gravity of the gamepad charging dock is shifted downward, thereby avoiding the situation where the center of gravity of the gamepad charging dock combined with the gamepad is too high when connecting the gamepad charging dock with the gamepad.

### BRIEF DESCRIPTION OF DRAWINGS

In order to provide a clearer explanation of the technical solutions disclosed in this embodiment or existing technology, a brief introduction will be given to the accompanying drawings required for the description of the embodiments or existing technology. It is obvious that the accompanying drawings described below are only some embodiments of the present disclosure. For those skilled in the art, other drawings can be obtained based on these drawings without requiring creative work.
FIG. 1 is a schematic structural diagram of a gamepad charging dock in an embodiment of the present disclosure.
FIG. 2 is an exploded schematic diagram of the gamepad charging dock in an embodiment of the present disclosure.
FIG. 3 is an exploded schematic diagram of a main body in an embodiment of the present disclosure.
FIG. 4 is a schematic structural diagram of a base in an embodiment of the present disclosure.
FIG. 5 is a cross-sectional view of FIG. 1 taken along a direction of A-A'.
FIG. 6 is a cross-sectional view of FIG. 1 taken along a direction of B-B'.
FIG. 7 is a cross-sectional view of FIG. 1 taken along a direction of C-C'.
FIG. 8 is a cross-sectional view of FIG. 1 taken along a direction of D-D'.
FIG. 9 is a cross-sectional view of FIG. 1 taken along a direction of E-E '.

Numeral reference: 1000- gamepad charging dock; 100- shell; 10- main body; 11- top panel; 111- button avoidance hole; 112- button circuit installation part; 113- first edge buckle; 114-first edge limit part; 12- side panel; 121- connection part; 1211- installation blind hole; 12111-avoidance groove; 1212- connection avoidance hole; 122- connection circuit limit part; 123-magnetic limit part; 124- first connection positioning part; 125- edge extension part; 1251- edge limit hole; 126- lighting limit part; 13- front panel; 131- lighting avoidance hole; 132- hot melt column; 133- second edge buckle; 134- second edge limit part; 14- back panel; 141- third edge buckle; 142- third edge limit part; 15- bottom panel; 151- wiring hole; 152- first connection limit part; 153- second connection positioning part; 154- fourth edge buckle; 155- fourth edge limit part; 20- base; 21- counterweight storage slot; 22- charging storage slot; 23- indication storage slot; 24-second connection limit part; 25- third connection positioning part; 26- first charging avoidance hole; 27- charging limit part; 28- indication light blocking part; 29- indication avoidance hole; 200- storage chamber; 210- first accommodation chamber; 220- second accommodation chamber; 300- lighting module; 310- lighting unit; 320- light guide unit; 321- light guide embedding part; 322- light guide fixing part; 323- hot melt hole; 400- charging module; 410- charging circuit board; 411- second charging avoidance hole; 420- connection circuit board; 421- first connection limit hole; 422- first positioning avoidance hole; 423- magnetic avoidance hole; 424- light guide limit avoidance hole; 430- electrical connector; 431- second positioning avoidance hole; 440- charging interface; 450- indicator circuit board; 460- indicator light; 500- control module; 510- button circuit board; 520- button; 530- keycap; 600- counterweight block; 700- magnetic member; 800-screw; 900- anti-slip pad.

### DESCRIPTION OF EMBODIMENTS

The following provides further detailed explanations of the present disclosure in combination with the accompanying drawings.

This specific embodiment is only an explanation of the present disclosure and is not a limitation of the present disclosure. After reading this specification, those skilled in the art may make modifications to the embodiment of the present disclosure as needed without any creative work, but as long as they are within the scope of the claims of the present disclosure.

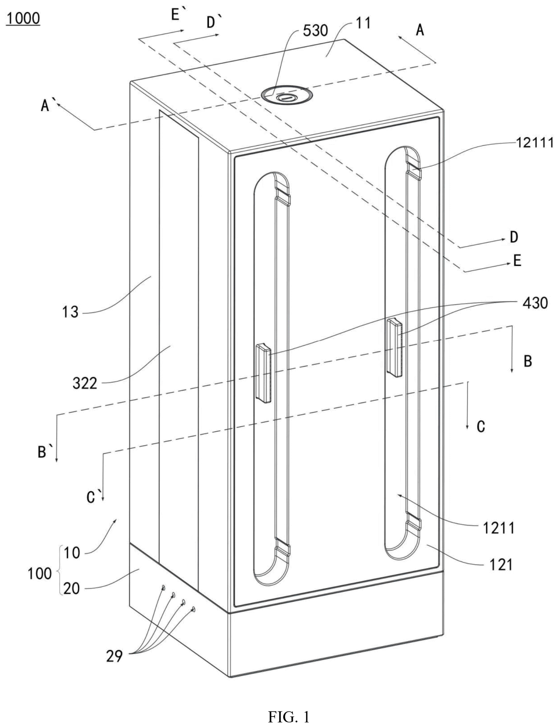

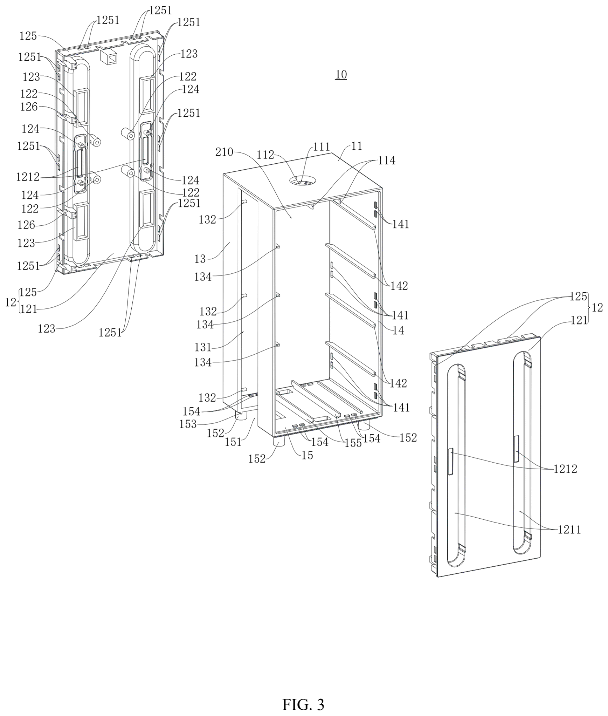

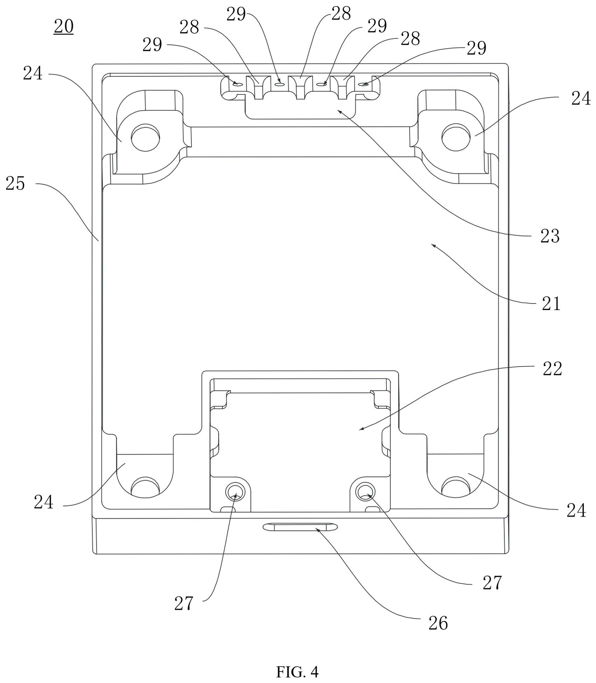

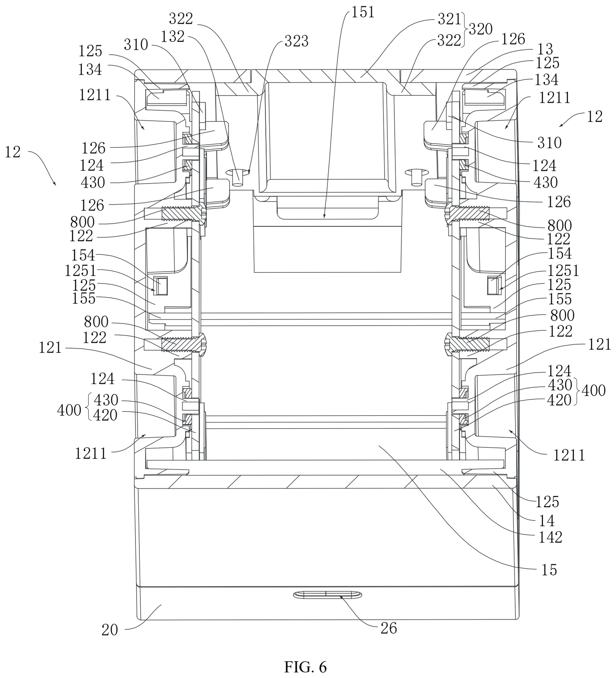

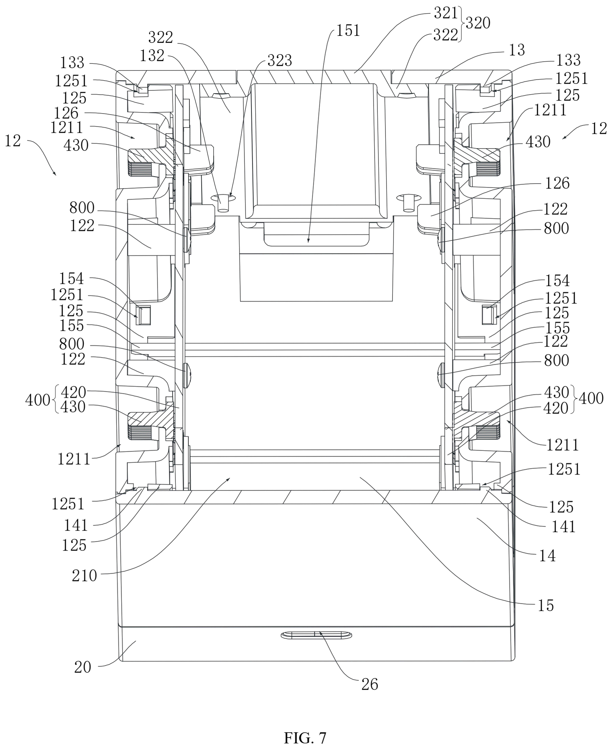

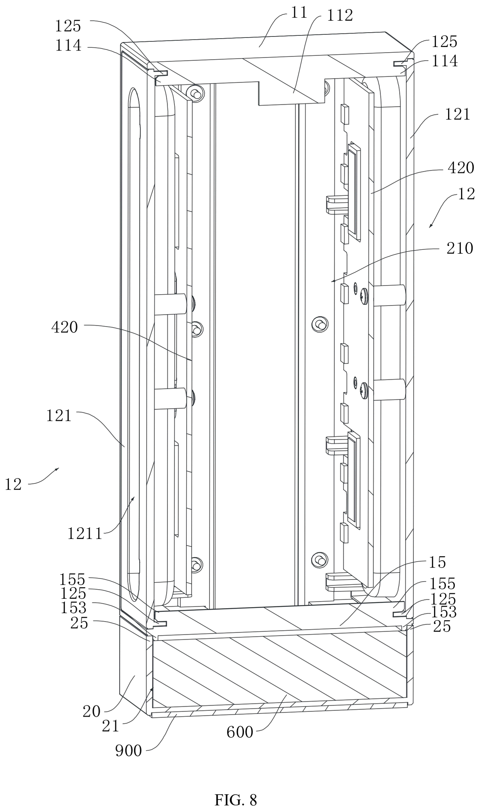

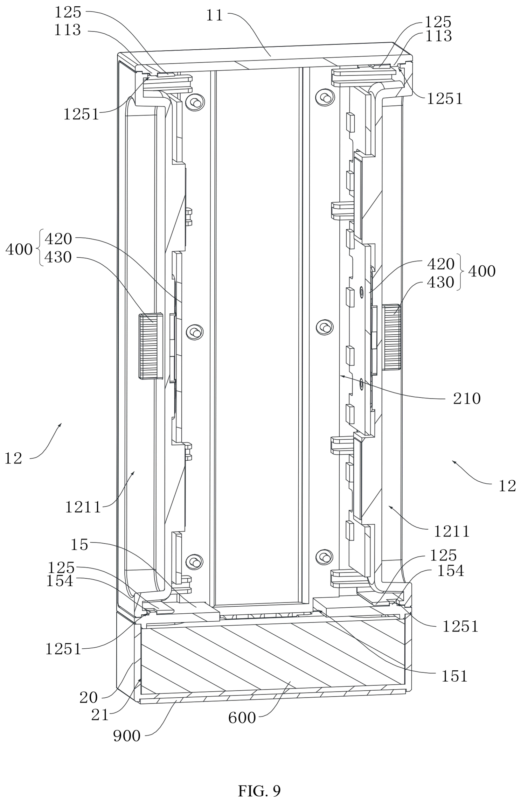

As shown in FIGs. 1-9, this embodiment relates to a gamepad charging dock 1000. This gamepad charging dock 1000 is configured to charge a gamepad. The gamepad charging dock 1000 includes a shell 100, a charging module 400, and a counterweight block 600. At least one connection part 121 is provided on one side of the shell 100, and the connection part 121 is detachably connected to the gamepad. The shell 100 is constructed to form a storage chamber 200. The charging module 400 is at least partially housed in the storage chamber 200. The charging module 400 is electrically connected to the gamepad to charge it. The counterweight block 600 is housed in the storage chamber 200 and is provided adjacent to a bottom of the storage chamber 200.

A cross-sectional shape of the shell 100 from its head to a bottom is the same and forms a vertical cylindrical structure, with a square cross-sectional shape; this enables the shell to be configured as a vertical cylindrical structure, which eliminates redundant base area that expands outward for stability compared to circular or inverted T-shaped structures. This minimizes a projected area (i.e. footprint) of the gamepad charging dock when placed on a desktop, and is provided with a counterweight block 600 to form a counterweight structure with low center of gravity.

Specifically, the counterweight block 600 is a high-density object, such as a lead block, an iron block, a cement block, etc. In some embodiments, the counterweight block 600 is a block formed by stacking metal sheets.

By providing the connection part 121 on one side of the shell 100. Make the gamepad detachable and connected to one side of the gamepad charging dock 1000, so that a length direction of the gamepad coincides with a height direction of the gamepad charging dock 1000, thereby reducing a size of the gamepad charging dock 1000 in a horizontal direction for easy placement in narrow spaces. At the same time, by accommodating the counterweight block 600 adjacent to the bottom of the storage chamber 200, the center of gravity of the gamepad charging dock 1000 is shifted downward, thereby avoiding a situation where the center of gravity of the combination of the gamepad charging dock 1000 and the gamepad is too high when the gamepad charging dock 1000 is connected to the gamepad. Furthermore, when placing or retrieving the gamepad, shaking or even falling off the gamepad charging dock 1000 is avoided, thereby avoiding damage caused by collision between the gamepad and the gamepad charging dock 1000.

As shown in FIGs. 1-3, there are two connection parts 121. The two connection parts 121 are arranged relative to each other for connecting two gamepads in opposite directions to the gamepad charging dock 1000, that is, the two gamepads are respectively connected to opposite sides of the gamepad charging dock 1000. Specifically, the connection parts 121 on two sides correspond to a first gamepad and a second gamepad of the gamepad. When the gamepad is suspended on the connection parts 121 on two sides, a balance weight is formed to prevent the center of gravity of the charging dock from shifting.

Specifically, the two opposite sides of the shell 100 are respectively provided with two connection parts 121, each of the two connection parts 121 is detachably connected to at least one gamepad. By placing the two connection parts 121 opposite to each other and placing the two gamepads on the two connection parts 121, the center of gravity of a combination of the gamepad and the gamepad charging dock 1000 is prevented from shifting, rendering it easier to maintain the balance of a combination of the gamepad and the gamepad charging dock 1000. In this embodiment, one connection part 121 is connected to two gamepads.

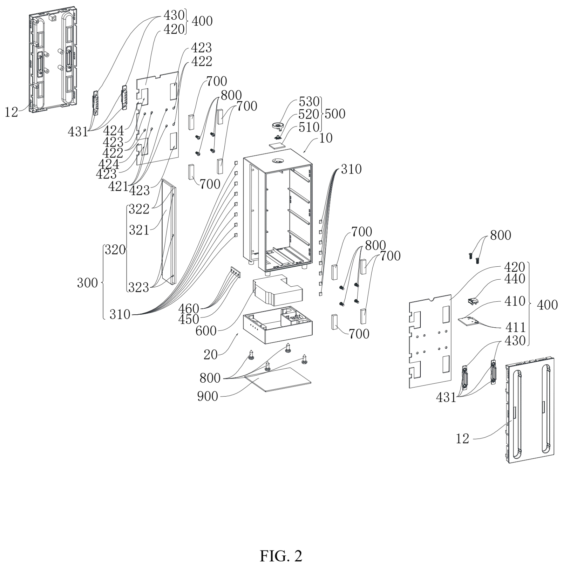

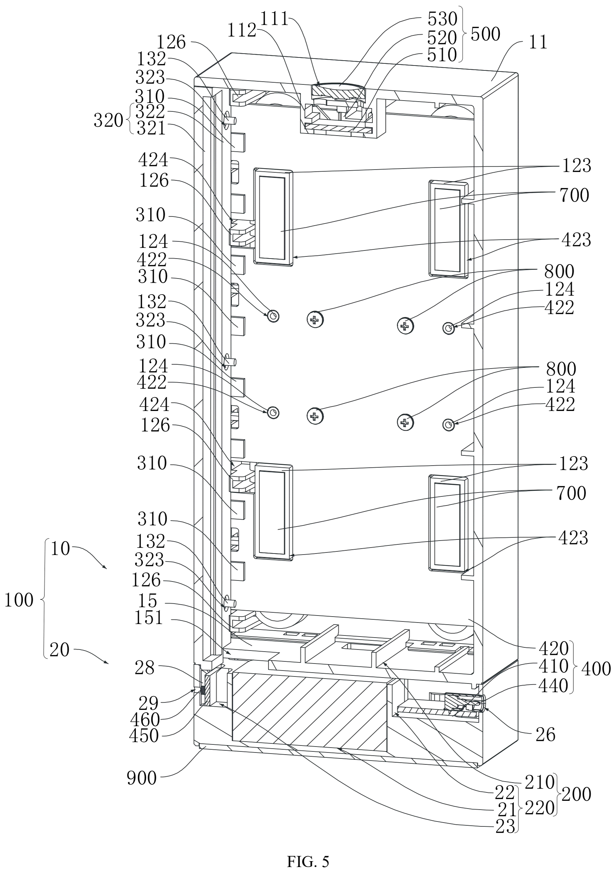

As shown in FIGs. 2 and 5, the gamepad charging dock 1000 further includes a magnetic member 700. The magnetic member 700 is provided on one side of the connection part 121 adjacent to the storage chamber 200. The magnetic member 700 is configured to attract a magnetic fitting member inside the gamepad, allowing the gamepad charging dock 1000 to be magnetically connected to the gamepad.

In this embodiment, the magnetic member 700 is adhered to one side of the connection part 121 adjacent to the storage chamber 200.

Specifically, a magnetic limit part 123 is provided on one side of the connection part 121 adjacent to the storage chamber 200. The magnetic limit part 123 is provided along an edge of the magnetic member 700 and extends towards the storage chamber 200 to limit a displacement of the magnetic member 700 in a vertical direction of an extension direction of the magnetic limit part 123, thereby improving the stability of a connection between the magnetic member 700 and the shell 100, avoiding the magnetic member 700 from falling off when the gamepad charging dock 1000 shakes, and facilitating the positioning and installation of the magnetic member 700.

As shown in FIGs. 1-3 and 6-9, the connection part 121 is provided with an installation blind hole 1211, and the installation blind hole 1211 is configured for at least a part of the gamepad to be embedded. In a direction of installing the gamepad onto the gamepad charging dock 1000, one side wall of the installation blind hole 1211 is configured to limit a position of the gamepad, in order to improve the stability of the connection between the gamepad and the gamepad charging dock 1000.

In this embodiment, a part where the gamepad is embedded in the installation blind hole 1211 is provided with a magnetic fitting member, and the magnetic fitting member cooperates with the magnetic member 700 to magnetically connect the gamepad and the gamepad charging dock 1000, thereby facilitating the assembly and separation of the gamepad and the gamepad charging dock 1000. The magnetic fitting member is a magnet or a metal that can be attracted by magnets. The metal is generally a metal sheet or a metal block.

An avoidance groove 12111 is provided on an inner wall of the installation blind hole 1211.

As shown in FIGs. 1-3 and 5-7, the gamepad charging dock 1000 further includes a lighting module 300. The lighting module 300 includes a lighting unit 310 and a light guide unit 320. The lighting unit 310 is housed in the storage chamber 200, and the light guide unit 320 is at least partially housed in the storage chamber 200. The shell 100 is provided with a lighting avoidance hole 131. The lighting avoidance hole 131 is configured for the light guide unit 320 to be embedded, so that the light generated by the lighting unit 310 can be emitted from the lighting avoidance hole 131.

Specifically, the lighting unit 310 is mounted on the connection circuit board 420, and the connection circuit board 420 is provided on one side of the connection part 121 adjacent to the storage chamber 200. The lighting unit 310 is arranged adjacent to the light guide unit 320. The light guide unit 320 includes a light guide embedding part 321 and two light guide fixing parts 322. The two light guide fixing parts 322 are respectively arranged at opposite ends of the light guide embedding part 321. The light guide embedding part 321 is embedded in the lighting avoidance hole 131, and the two light guide fixing parts 322 are respectively in contact with one side of the shell 100 facing the storage chamber 200. One side of the shell 100 facing the storage chamber 200 is provided with a hot melt column 132, and the light guide fixing part 322 is provided with a hot melt hole 323. The hot melt hole 323 is configured for the hot melt column 132 to pass through. Under hot melt treatment, the light guide fixing part 322 is connected to the shell 100 by hot melt.

In this embodiment, the lighting unit 310 consists of 16 LED lights, and the two connection circuit boards 420 are provided with 8 LED lights. The two light guide fixing parts 322 are both provided with three hot melt holes 323, and one side of the shell 100 facing the storage chamber 200 is provided with six hot melt columns 132.

As shown in FIGs. 2-3, 5, and 8, the gamepad charging dock 1000 further includes a control module 500, and the control module 500 is electrically connected to the lighting unit 310 for controlling the lighting unit 310.

Specifically, the control module 500 includes a keycap 530, a button 520, and a button circuit board 510. The shell 100 is provided with a button avoidance hole 111, and the button avoidance hole 111 is configured for at least a part of the keycap 530 to be embedded. The button circuit board 510 is accommodated in the storage chamber 200 and is adjacent to the button avoidance hole 111. The button 520 is provided on one side of the button circuit board 510 adjacent to the shell 100 and abuts against one end of the keycap 530 adjacent to the storage chamber 200. The button circuit board 510 is electrically connected to the lighting unit 310.

More specifically, the button circuit board 510 is electrically connected to the connection circuit board 420 to send a control signal generated by the button 520 to the connection circuit board 420, thereby controlling the lighting unit 310. The control of the lighting unit 310 includes controlling the lighting unit 310 to turn on and off, as well as controlling the lighting unit 310 to switch modes. The keycap 530 is configured for a user to press the button 520 to control the lighting unit 310. A button circuit installation part 112 is provided on one side of the shell 100 facing the storage chamber 200. The button circuit installation part 112 extends towards the storage chamber 200 and is provided with a space for installing and accommodating the button circuit board 510. The keycap 530 is provided on one side of the button 520 facing away from the button circuit board 510. The button avoidance hole 111 is configured for at least a part of the keycap 530 to be embedded, so that at least a part of the keycap 530 is in contact with the button 520.

As shown in FIGs. 2 and 4-7, the charging module 400 includes a connection circuit board 420 and an electrical connector 430. The connection circuit board 420 is provided on one side of the connection part 121 facing the storage chamber 200. The electrical connector 430 is provided on one side of the connection circuit board 420 facing the connection part 121. The connection part 121 is provided with a connection avoidance hole 1212, and the connection avoidance hole 1212 is configured for at least a part of the electrical connector 430 to be embedded or at least a part of the gamepad to be embedded, so that the electrical connector 430 is electrically connected to the gamepad. The connection circuit board 420 is connected to an external power supply, the connection circuit board 420 is electrically connected to the electrical connector 430, and the electrical connector 430 is electrically connected to the gamepad and charges the gamepad.

The connection circuit board 420 is provided on one side of the connection part 121 facing the storage chamber 200 and is offset relative to a center of gravity of the shell 100. When only one side of the connection part 121 is suspended with the gamepad, the connection circuit board 420 on an opposite side forms a balanced weight with a bottom edge of the shell 100 as a fulcrum.

Specifically, the charging module 400 further includes a charging interface 440 and a charging circuit board 410, with the charging interface 440 provided on the charging circuit board 410. The charging circuit board 410 is housed in the storage chamber 200. The shell 100 is provided with a first charging avoidance hole 26, and the first charging avoidance hole 26 is configured for at least a part of the charging interface 440 to be embedded and/or at least a part of the external power supply to be embedded, so as to electrically connect the external power supply with the charging circuit board 410. One side of the shell 100 facing the storage chamber 200 is provided with a charging limit part 27, and the charging circuit board 410 is provided with a second charging avoidance hole 411. The charging limit part 27 is provided with a hole aligned with the second charging avoidance hole 411, which is configured for inserting a screw 800 to fix the charging circuit board 410 and the charging limit part 27.

In this embodiment, the electrical connector 430 is a male connector, and one end of the gamepad near the connection part 121 is provided with a female connector, and the female connector allows at least a part of the male connector to be embedded. The connection avoidance hole 1212 is configured for at least a part of the electrical connector 430 to be embedded, so that the electrical connector 430 is electrically connected to the gamepad. The first charging avoidance hole 26 is configured for at least part of the charging interface 440 to be embedded and at least a part of the external power supply to be embedded, so that the external power supply is electrically connected to the charging circuit board 410. The electrical connector 430 is tightly connected to the gamepad, thereby further improving a connection stability between the gamepad charging dock 1000 and the gamepad.

As shown in FIGs. 2-3 and 6, a first connection positioning part 124 is provided on one side of the connection part 121 facing the storage chamber 200, and the first connection positioning part 124 extends towards the storage chamber 200. The electrical connector 430 is provided with a second positioning avoidance hole 431. The connection circuit board 420 is provided with a first positioning avoidance hole 422. The first positioning avoidance hole 422 and the second positioning avoidance hole 431 are configured for the first connection positioning part 124 to pass through, in order to limit a displacement of the connection part 121, the connection circuit board 420, and the electrical connector 430 in a vertical direction of an extension direction of the first connection positioning part 124, and to simultaneously facilitate electrical connection and positioning installation of the connection circuit board 420.

Specifically, the connection circuit board 420 is provided with a first connection limit hole 421, and a connection circuit limit part 122 is provided on one side of the connection part 121 facing the storage chamber 200. The connection circuit limit part 122 passes through the first connection limit hole 421 to limit the connection circuit board 420. The connection circuit limit part 122 is configured for the screw 800 to be inserted and to fix the connection part 121 and the connection circuit board 420 in place.

As shown in FIGs. 1-9, the shell 100 includes a main body 10 and a base 20. The base 20 is connected to a bottom of the main body 10. The connection part 121 is provided on one side of the main body 10. The main body 10 is constructed to form a first accommodation chamber 210, and the base 20 is constructed to form a second accommodation chamber 220. The first accommodation chamber 210 and the second accommodation chamber 220 together form a storage chamber 200. The charging module 400 is at least partially accommodated in the first accommodation chamber 210, and the counterweight block 600 is accommodated in the second accommodation chamber 220. The shell 100 adopts a split-type arrangement of the main body 10 and the base 20, which facilitates the separation of the main body 10 and the base 20 for separate maintenance of the components inside the main body 10 or the base 20.

Specifically, the charging module 400 is partially housed in the first accommodation chamber 210, and the charging module 400 is partially housed in the second accommodation chamber 220.

More specifically, one side of the main body 10 facing the base 20 is provided with a first connection limit part 152 and a second connection positioning part 153. The first connection limit part 152 and the second connection positioning part 153 are extended towards the base 20, and the second connection positioning part 153 is arranged along an edge of the side of the main body 10 facing the base 20. One side of the base 20 adjacent to the main body 10 is provided with a second connection limit part 24 and a third connection positioning part 25. The third connection positioning part 25 is arranged along an edge of the base 20 adjacent to the main body 10, and extends towards the main body 10. When the main body 10 and the base 20 are assembled into one, the first connection limit part 152 is embedded into the second connection limit part 24. The first connection limit part 152 is provided with a hole for the screw 800 to be inserted, and the second connection limit part 24 is provided with a hole for the screw 800 to pass through so as to fix the main body 10 and the base 20 by the screw 800. When the main body 10 and the base 20 are assembled into one, the second connection positioning part 153 is provided on one side of the third connection positioning part 25 adjacent to the second accommodation chamber 220. Through a cooperation of the second connection positioning part 153 and the third connection positioning part 25, a connection posture of the main body 10 and the base 20 is positioned.

As shown in FIGs. 2-3, the main body 10 includes a front panel 13, a bottom panel 15, a back panel 14, a top panel 11, and two side panels 12. The front panel 13, the bottom panel 15, the back panel 14, the top panel 11, and the two side panels 12 jointly form the first accommodation chamber 210. The two side panels 12 are arranged opposite each other, the front panel 13 is arranged opposite to the back panel 14, and the top panel 11 is arranged opposite the bottom panel 15. One end of the front panel 13 is connected to the top panel 11, the other end of the front panel 13 is connected to the bottom panel 15, one end of the back panel 14 is connected to the top panel 11, and the other end of the back panel 14 is connected to the bottom panel 15.

As shown in FIGs. 2-3 and 5-9, the two side panels 12 are respectively covered at opposite ends of the combination of the front panel 13, the back panel 14, the top panel 11, and the bottom panel 15. The side panel 12 is provided with an edge extension part 125 on one side facing the first accommodation chamber 210, and the edge extension part 125 is arranged along an edge of the side panel 12 and extends towards the first accommodation chamber 210. The edge extension part 125 is provided with an edge limit hole 1251.

The top panel 11 is provided with a first edge buckle 113 and a first edge limit part 114 on one side facing the first accommodation chamber 210. The first edge buckle 113 and the first edge limit part 114 are arranged adjacent to the side panel 12 and extend towards the first accommodation chamber 210. The first edge limit part 114 extends towards the side panel 12 at one end away from the top panel 11, so that there is a space between at least part of the first edge limit part 114 and the top panel 11. This spacing is configured for the edge extension part 125 to be inserted, and the first edge buckle 113 is inserted into the edge limit hole 1251, so that the top panel 11 and the side panel 12 are connected by a buckle.

One side of the front panel 13 facing the first accommodation chamber 210 is provided with a second edge buckle 133 and a second edge limit part 134. The second edge buckle 133 and the second edge limit part 134 are arranged to be adjacent to the side panel 12, and extend towards the first accommodation chamber 210. The second edge limit part 134 extends towards the side panel 12 at one end away from the top panel 11, so that at least a part of the second edge limit part 134 is spaced apart from the front panel 13, and this spacing is configured for the edge extension part 125 to be inserted. At the same time, the second edge buckle 133 is inserted into the edge limit hole 1251, so that the front panel 13 is connected to the side panel 12 by a buckle.

The back panel 14 is provided with a third edge buckle 141 and a third edge limit part 142 on one side facing the first accommodation chamber 210. The third edge buckle 141 and the third edge limit part 142 are arranged adjacent to the side panel 12, and extend towards the first accommodation chamber 210. The third edge limit part 142 extends towards the side panel 12 at one end away from the top panel 11, so that at least a part of the third edge limit part 142 is spaced apart from the back panel 14, and this spacing is configured for the edge extension part 125 to be inserted. At the same time, the third edge buckle 141 is inserted into the edge limit hole 1251, so that the back panel 14 is connected to the side panel 12 by a buckle.

One side of the bottom panel 15 facing the first accommodation chamber 210 is provided with a fourth edge buckle 154 and a fourth edge limit part 155. The fourth edge buckle 154 and the fourth edge limit part 155 are arranged adjacent to the side panel 12, and extend towards the first accommodation chamber 210. The fourth edge limit part 155 extends towards the side panel 12 at one end away from the top panel 11, so that at least a part of the fourth edge limit part 155 is spaced apart from the bottom panel 15, and this spacing is configured for the edge extension part 125 to be inserted. At the same time, the fourth edge buckle 154 is inserted into the edge limit hole 1251, so that the bottom panel 15 is connected to the side panel 12 by a buckle.

As shown in FIGs. 1-3, the connection part 121 is provided on the side panel 12. In this embodiment, there are two connection parts 121, which are respectively arranged on two side panels 12. Each of the connection parts 121 is provided with two installation blind holes 1211, both of the two installation blind holes 1211 are respectively connected to one gamepad. An edge of the connection part 121 is connected to the edge extension part 125.

As shown in FIGs. 1-3, the connection circuit board 420 is provided on one side of the connection part 121 facing the first accommodation chamber 210. One side of the connection part 121 facing the first accommodation chamber 210 is provided with a connection circuit limit part 122, and the connection circuit board 420 is provided with a first connection limit hole 421 configured for the connection circuit limit part 122 to be embedded. The connection circuit limit part 122 is provided with a hole for the screw 800 to be inserted so as to fix the connection circuit board 420 and the connection part 121 through the screw 800.

As shown in FIGs. 2-3 and 5-9, the electrical connector 430 is provided on one side of the connection circuit board 420 facing the connection part 121. A bottom wall of the installation blind hole 1211 is provided with a connection avoidance hole 1212, and the connection avoidance hole 1212 is configured for the electrical connector 430 to pass through, so that at least part of the electrical connector 430 is embedded in the gamepad to achieve an electrical connection between the gamepad charging dock 1000 and the gamepad.

As shown in FIGs. 2-3 and 5-9, the magnetic member 700 is provided on one side of the connection part 121 facing the first accommodation chamber 210, specifically on an opposite side of the connection part 121 where the installation blind hole 1211 is installed. The magnetic limit part 123 is provided on one side of the connection part 121 facing the first accommodation chamber 210, specifically on the opposite side of the connection part 121 where the installation blind hole 1211 is installed.

Due to the need for the electrical connector 430 to pass through the connection avoidance hole 1212, a distance between the connection circuit board 420 and the connection part 121 is fixed. In order to enhance a connection strength between the magnetic member 700 and the magnetic fitting member, the size of the magnetic member 700 is increased to increase its magnetism. The connection circuit board 420 is covered on one side of the connection part 121 facing the first accommodation chamber 210, which is not conducive to increasing the size of the magnetic member 700. Therefore, a magnetic avoidance hole 423 is provided on the connection circuit board 420 for the magnetic member 700 to pass through, thereby facilitating the increase of the size of the magnetic member 700.

As shown in FIGs. 2-3 and 5-7, the front panel 13 is provided with a lighting avoidance hole 131. The lighting avoidance hole 131 is configured for the light guide embedding part 321 of the light guide unit 320 to be embedded, and the light guide fixing part 322 is in contact with one side of the front panel 13 facing the first accommodation chamber 210. One side of the front panel 13 facing the first accommodation chamber 210 is provided with a hot melt column 132, and the light guide fixing part 322 is provided with a hot melt hole 323 configured for the hot melt column 132 to pass through. Under hot melt treatment, the light guide unit 320 is connected to the front panel 13 by hot melt. The side panel 12 is provided with a lighting limit part 126 on one side facing the first accommodation chamber 210. The lighting limit part 126 extends towards the light guide embedding part 321 to extend to one side of the light guide fixing part 322 facing away from the front panel 13, thereby clamping the light guide fixing part 322 between the front panel 13 and the lighting limit part 126, thereby increasing the connection stability between the front panel 13 and the light guide fixing part 322. The connection circuit board 420 is provided with a light guide limit avoidance hole 424, and the light guide limit avoidance hole 424 is configured for the lighting limit part 126 to pass through, so that the lighting limit part 126 extends to one side of the light guide fixing part 322 facing away from the front panel 13.

As shown in FIGs. 1-3, 5, and 8, the top panel 11 is provided with a button avoidance hole 111, and the button avoidance hole 111 is configured for at least a part of the keycap 530 to be embedded. On the side of the top panel 11 facing the first accommodation chamber 210 is provided with a button circuit installation part 112, and the button circuit installation part 112 extends towards the first accommodation chamber 210. The button circuit installation part 112 is provided with a space for installing and accommodating the button circuit board 510. The keycap 530 is provided on one side of the button 520 facing away from the button circuit board 510. The button avoidance hole 111 is configured for at least a part of the keycap 530 to be embedded, so that at least a part of the keycap 530 is in contact with the button 520.

As shown in FIGs. 1-9, the base 20 is provided with a counterweight storage slot 21. The counterweight storage slot 21 is configured to accommodate the counterweight block 600. In some embodiments, the counterweight block 600 is adhered within the counterweight storage slot 21.

The base 20 is provided with a charging storage slot 22, and the charging storage slot 22 is configured to accommodate a part of the charging module 400, specifically for accommodating the charging circuit board 410 and the charging interface 440. One side wall of the charging storage slot 22 is provided with a first charging avoidance hole 26 that connects to an outside world. The charging avoidance hole is configured for a part of the charging interface 440 to be embedded and a part of the external power supply to be embedded, so that the charging circuit board 410 is electrically connected to the external power supply, thereby electrically connecting the external power supply to the charging module 400. A bottom wall of the charging storage slot 22 is provided with a charging limit part 27, and the charging limit part 27 extends towards the charging circuit board 410. The charging circuit board 410 is provided with a second charging avoidance hole 411, and the charging limit part 27 is provided with a hole configured for the screw 800 to be inserted. The screw 800 is inserted through the second charging avoidance hole 411 to fit into the charging limit part 27, thereby fixing the charging circuit board 410 to the base 20.

The base 20 is provided with an indication storage slot 23, and the indication storage slot 23 is configured to accommodate the indicator circuit board 450 and the indicator light 460. The indicator light 460 is configured to display the charging state of the gamepad. The indicator light 460 is provided on the indicator circuit board 450, and one side wall of the indication storage slot 23 is provided with an indication avoidance hole 29 that connects to the outside. The indicator circuit board 450 is arranged close to the indication avoidance hole 29, so that the indicator light 460 is aligned with the indication avoidance hole 29, and the light of the indicator light 460 is emitted. The counterweight storage slot 21, charging storage slot 22, and indication storage slot 23 jointly form the second accommodation chamber 220.

In some embodiments, there are two or more indicator lights 460 indicating the number of the indication avoidance hole 29 corresponding to the number of the indicator light 460. One side wall of the indication storage slot 23 is provided with an indication light blocking part 28, and the indication light blocking part 28 is provided between two avoidance holes and extends to the indicator circuit board 450 to prevent adjacent indicator light 460 from passing through and affecting a display effect of the indicator lights 460.

In this embodiment, there are four indicator lights 460, which correspond to charging states of the four gamepads.

On one side of the base 20 away from the main body 10, there is an anti-slip pad 900. When the gamepad charging dock 1000 is placed on the desktop, the anti-slip pad 900 is configured to increase friction between the gamepad charging dock 1000 and the desktop, thereby preventing the gamepad charging dock 1000 from sliding.

As shown in FIGs. 5-7 and 9, the bottom panel 15 is provided with a wiring hole 151. The wiring hole 151 connects the first accommodation chamber 210 and the second accommodation chamber 220. The wiring hole 151 is configured for an electrical connection between the charging connection board and the connection circuit board 420, as well as for an electrical connection between the connection circuit board 420 and the indicator circuit board 450.

During use, the gamepad is inserted into the installation blind hole 1211, so that the electrical connector 430 is embedded in the gamepad. The external power supply is electrically connected to the charging interface 440 to flow current through the charging circuit board 410, the connection circuit board 420, and the electrical connector 430, thereby charging the gamepad. The connection circuit board 420 is configured to send control information to the indicator circuit board 450 to light up the corresponding indicator light 460 of the gamepad.

Furthermore, the user presses the keycap 530 to press the button 520, and sends a control signal to the connection circuit board 420 through the button circuit board 510. The connection circuit board 420 controls the lighting unit 310 to turn on or off, or controls the switching of lighting modes, such as switching colors. The light emitted by the lighting unit 310 is guided by the light guide unit 320 to the lighting avoidance hole 131 to project the light of the lighting unit 310 onto the outside.

The above is only used to illustrate the technical solution disclosed in the present disclosure and not to limit it. Any other modifications or equivalent substitutions made by those skilled in the art to the technical solution disclosed in the present disclosure, as long as they do not deviate from the spirit and scope of the technical solution disclosed in the present disclosure, should be included in the scope of the claims disclosed in the present disclosure.

## Claims

1. A gamepad charging dock for charging a gamepad, wherein the gamepad charging dock comprises a shell, a charging module, and a counterweight block;
one side of the shell is provided with at least one connection part, and the connection part is detachably connected to the gamepad;
the shell is configured to be a storage chamber, and the charging module is at least partially accommodated in the storage chamber;
the charging module is electrically connected to the gamepad to charge the gamepad, and the counterweight block is accommodated in the storage chamber and close to a bottom of the storage chamber.

2. The gamepad charging dock according to claim 1, wherein there are two connection parts, and the two connection parts are arranged opposite to each other.

3. The gamepad charging dock according to claim 1, further comprising a magnetic member, wherein the magnetic member is provided on one side of the connection part adjacent to the storage chamber and is configured to attract a magnetic fitting member inside the gamepad, so that the gamepad charging dock is magnetically connected to the gamepad.

4. The gamepad charging dock according to claim 3, wherein a magnetic limit part is provided on one side of the connection part adjacent to the storage chamber, and the magnetic limit part is arranged along an edge of the magnetic member and extends towards the storage chamber to limit a displacement of the magnetic member in a vertical direction of an extension direction of the magnetic limit part.

5. The gamepad charging dock according to claim 1, wherein the connection part is provided with an installation blind hole, and the installation blind hole is configured for at least a part of the gamepad to be embedded.

6. The gamepad charging dock according to claim 1, further comprising a lighting module, wherein the lighting module comprises a lighting unit and a light guide unit, the lighting unit is accommodated in the storage chamber, the light guide unit is at least partially accommodated in the storage chamber, and the shell is provided with a lighting avoidance hole configured for the light guide unit to be embedded, so that light generated by the lighting unit is emitted from the lighting avoidance hole.

7. The gamepad charging dock according to claim 6, further comprising a control module electrically connected to the lighting unit configured for controlling the lighting unit.

8. The gamepad charging dock according to claim 7, wherein the control module comprises a keycap, a button, and a button circuit board,
wherein the shell is provided with a button avoidance hole configured for at least a part of the keycap to be embedded, the button circuit board is accommodated in the storage chamber and adjacent to the button avoidance hole, and the button is arranged on one side of the button circuit board adjacent to the shell and abut against one end of the keycap adjacent to the storage chamber,
wherein the button circuit board is electrically connected to the lighting unit.

9. The gamepad charging dock according to claim 1, wherein the charging module comprises a connection circuit board and an electrical connector,
wherein the connection circuit board is arranged on one side of the connection part facing the storage chamber, and the electrical connector is arranged on one side of the connection circuit board facing the connection part;
wherein the connection part is provided with a connection avoidance hole, and the connection avoidance hole is configured for at least a part of the electrical connector to be embedded or at least a part of the gamepad to be embedded, so that the electrical connector is electrically connected to the gamepad;
wherein the connection circuit board is connected to an external power source, the connection circuit board is electrically connected to the electrical connector, and the electrical connector is electrically connected to the gamepad to charge the gamepad.

10. The gamepad charging dock according to claim 9, wherein the electrical connector is a male connector, and one end of the gamepad adjacent to the connection part is provided with a female connector, and the female connector is configured for at least a part of the male connector to be embedded.

11. The gamepad charging dock according to claim 9, wherein a first connection positioning part is provided on one side of the connection part facing the storage chamber, the first connection positioning part extends towards the storage chamber, the electrical connector is provided with a second positioning avoidance hole,
the connection circuit board is provided with a first positioning avoidance hole, and the first positioning avoidance hole and the second positioning avoidance hole are configured for the first connection positioning part to pass through.

12. The gamepad charging dock according to claim 1, wherein the shell comprises a main body and a base.

13. The gamepad charging dock according to claim 12, wherein the base is provided with an indication storage slot, and the indication storage slot is configured to accommodate the indicator circuit board and the indicator light, and the indicator light is configured to display a charging state of the gamepad.

14. The gamepad charging dock according to claim 12, wherein an anti-slip pad is provided on one side of the base away from the main body;
when the gamepad charging dock is placed on the desktop, the anti-slip pad is configured to increase friction between the gamepad charging dock and the desktop.
